# EUROPÄISCHE PATENTSCHRIFT

(11) **EP 3 158 539 B1**
(45) Veröffentlichungstag und Bekanntmachung des Hinweises auf die Patenterteilung: **13.09.2023**
(21) Anmeldenummer: 15719170.1
(22) Anmeldetag: 20.04.2015
(51) Int. Cl.: G07C 9/00

(54) **VERFAHREN ZUR FERNSTEUERUNG EINER FUNKTION EINES KRAFTFAHRZEUGES MITTELS EINER FAHRZEUGEXTERNEN ELEKTRONISCHEN EINHEIT SOWIE EIN KRAFTFAHRZEUG**
METHOD FOR THE REMOTE CONTROL OF A FUNCTION OF A MOTOR VEHICLE USING AN ELECTRONIC UNIT OUTSIDE THE VEHICLE, AND A MOTOR VEHICLE
PROCÉDÉ DE TÉLÉCOMMANDE D'UNE FONCTION D'UN VÉHICULE AUTOMOBILE AU MOYEN D'UNE UNITÉ ÉLECTRONIQUE EXTÉRIEURE AU VÉHICULE ET VÉHICULE AUTOMOBILE

(30) Priorität: 18.06.2014 DE 102014005796
(43) Veröffentlichungstag der Anmeldung: 26.04.2017
(73) Patentinhaber: Valeo Schalter und Sensoren GmbH, 74321 Bietigheim-Bissingen (DE)
(72) Erfinder: BECK, Manuel, 74321 Bietigheim-Bissingen (DE); GEHIN, Frederic, 94100 Saint Maur des Fosses (FR); SCHEERLE, Marc, 72127 Kusterdingen (DE); PRESSEL, Ullrich, 70771 Leinfelden-Echterdingen (DE); ANDERSCHITZ, Martin, 71636 Ludwigsburg (DE); FRIESEN, Viktor, 76139 Karlsruhe (DE); HILLER, Andreas, 70563 Stuttgart (DE)
(86) Internationale Anmeldenummer: PCT/EP2015/058513
(87) Internationale Veröffentlichungsnummer: WO 2015/192996

(56) Entgegenhaltungen:
- EP-A1- 1 191 486
- EP-A1- 2 320 388
- EP-A1- 2 424 185
- EP-A2- 1 043 464
- DE-A1-102012 012 389
- US-A1- 2008 148 369

## Beschreibung

Die Erfindung betrifft ein Verfahren zur Fernsteuerung einer Funktion eines Kraftfahrzeuges mittels einer fahrzeugexternen elektronischen Einheit, bei welchem die fahrzeugexterne elektronische Einheit während des Fahrvorganges des Kraftfahrzeuges überprüft wird, indem die fahrzeugexterne elektronische Einheit eine Operation löst, deren Ergebnis von einem Steuergerät des Kraftfahrzeuges auf Richtigkeit geprüft wird.

Bei der Verwendung von Consumer-Endgeräten, wie beispielsweise Smartphones, zur Fernsteuerung von Fahrzeugen, muss das Consumer-Endgerät während des gesamten Fahrvorganges aus Sicherheitsgründen überwacht werden. Dies erfolgt, indem das Consumer-Endgerät Operationen ausführt. Die für die Operationen notwendigen Eingangsdaten werden vom Steuergerät des Kraftfahrzeuges generiert. Diese Daten werden von dem Steuergerät auf das Consumer-Endgerät übertragen. Das Consumer-Endgerät führt die Operationen aus und sendet das Ergebnis an das Steuergerät zurück, welches dieses verifiziert. Zur Bereitstellung der Eingangsdaten und Verifizierung ist eine hohe Rechenleistung des Fahrzeugsteuergerätes notwendig. Darüber hinaus ist eine große Bandbreite der Kommunikation zwischen dem Consumer-Endgerät und dem Steuergerät auf Grund der Übertragung einer Vielzahl von Daten notwendig.

Die EP 1 043 464 A2 zeigt ein Verfahren zur Kontrolle des Zugangs zu einem Fahrzeug mit einer Tür und einem Motor. Das Verfahren umfasst folgende Schritte: a) Übertragung eines Signals von einer Fernbedienung, die außerhalb des Fahrzeugs vorgesehen ist, b) Empfang des Signals am Fahrzeug, c) Messung der Signalstärke am Fahrzeug, d) Aktivierung einer ersten Funktion des Fahrzeugs, wenn die Stärke des Signals einen ersten vordefinierten Schwellenwert überschreitet, und e) danach wiederholen der Schritte a) bis c) und Aktivierung einer zweiten Funktion des Fahrzeugs, wenn die Stärke des Signals einen zweiten vordefinierten Schwellenwert überschreitet.

Aufgabe der Erfindung ist es, ein Verfahren zur Fernsteuerung einer Funktion eines Kraftfahrzeuges mittels einer fahrzeugexternen elektronischen Einheit anzugeben, bei welchem die Rechenleistung des Steuergerätes des Kraftfahrzeuges oder die Bandbreite der Kommunikation zwischen der fahrzeugexternen elektronischen Einheit und dem Steuergerät des Kraftfahrzeuges eingeschränkt werden.

Diese Aufgabe wird durch die Merkmale der unabhängigen Ansprüche gelöst.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung, sowie der Erläuterung von Ausführungsbeispielen der Erfindung, die in den Figuren dargestellt sind.

Die Aufgabe ist mit dem Verfahren dadurch gelöst, dass in dem Steuergerät eine Indexliste gespeichert ist, wobei zur Auslösung einer Operation ein Index von dem Steuergerät an die fahrzeugexterne elektronische Einheit übertragen wird und die fahrzeugexterne elektronische Einheit anhand des Index Eingangsgrößen, welche in Abhängigkeit des Index in der fahrzeugexternen elektronischen Einheit gespeichert sind, bestimmt, mittels welchen die Operation ausgeführt wird. Die Operation ist beispielsweise eine mathematische Operation. Die Verlagerung der Eingangsgrößen in den Speicherbereich der fahrzeugexternen elektronischen Einheit führt dazu, dass die Rechenleistung des Steuergerätes beschränkt wird. Da an die fahrzeugexterne elektronische Einheit nur ein Index übertragen werden muss, wird weiterhin die Bandbreite der Kommunikation eingeschränkt. In dem Steuergerät wird somit nur noch eine look-up-Tabelle mit Indizies abgespeichert, deren Speicherbereich sich somit wesentlich verringert. Die Kommunikation wird weiter reduziert von einem Startwert, der je nach Applikation viele Byte (>10 Byte) groß sein kann auf einen Tabellen-Index, der sich je nach Anwendung mit deutlich weniger (z.B. 2 Byte) darstellen lässt. Die Größe des Index leitet sich dabei daraus ab, wie viele unterschiedliche Eingangsgrößen man benötigt, um Fehler sicher detektieren zu können.

In der fahrzeugexternen elektronischen Einheit ist zu jedem Index neben den Eingangsgrößen ein erwartetes Ergebnis der Operation abgespeichert, welches gemeinsam mit dem berechneten Ergebnis an das Steuergerät übersandt wird. Durch die weitere Abspeicherung des erwarteten Ergebnisses in der fahrzeugexternen elektronischen Einheit werden die Rechenleistung und die Bandbreite der Kommunikation weiter beschränkt. Das Steuergerät des Kraftfahrzeuges hat lediglich die beiden von dem fahrzeugexternen elektronischen Gerät übermittelten Daten, wie berechnetes Ergebnis und zu erwartendes Ergebnis, zu vergleichen und kann somit einfach und schnell die Funktionstüchtigkeit des fahrzeugexternen elektronischen Gerätes feststellen.

In einer Ausgestaltung wählt das Steuergerät ein, an die fahrzeugexterne elektronische Einheit zu übermittelnden Index mittels eines Zufallsgenerators oder aus der Indexliste aus. Die Verwendung eines Zufallsgenerators erhöht den Sicherheitsstandard der fahrzeugexternen elektronischen Einheit, da nicht herzuleiten ist, welche Rechenaufgabe die fahrzeugexterne elektronische Einheit als nächstes auszuführen hat.

Das Ergebnis, das von der fahrzeugexternen elektronischen Einheit berechnet wird, wird im Steuergerät des Kraftfahrzeugs überprüft. Dabei umfasst die Überprüfung insbesondere dessen Recheneinheit oder Speicher oder Software. Die Überprüfung kann durch Vergleich der Daten, z.B. das berechnete Ergebnis und das zu erwartende Ergebnis, erfolgen. Stimmt das berechnete Ergebnis mit dem zu erwartenden Ergebnis überein, kann auf die Funktionsfähigkeit der elektronischen Einheit geschlossen werden. Die Steuerung des Kraftfahrzeugs mittels der elektronischen Einheit wird nur bei korrekter Berechnung freigegeben. Dadurch kann eine sichere Überwachung der Funktionalität der fahrzeugexternen elektronischen Einheit zur Fernsteuerung des Kraftfahrzeugs gewährleistet werden.

Bei der Berechnung des Ergebnisses mittels der fahrzeugexternen elektronischen Einheit sind mehrere Komponenten der fahrzeugexternen elektronischen Einheit erforderlich und werden entsprechend genutzt. Dies dient dem Test der beteiligten Komponenten der fahrzeugexternen elektronischen Einheit auf deren Zuverlässigkeit. Für die Durchführung der Überprüfung wird zumindest eine Auswahl von folgenden Komponenten benötigt: z.B. Prozessorkern/e, Cache-Speicher, RAM, ROM, Flash-EPROM, Monitor-Controller, Eingabe-Controller. Weitere Komponenten der jeweiligen fahrzeugexternen elektronischen Einheit können ebenfalls beteiligt sein.

Darüber hinaus ist die Indextabelle z.B. bei Software-Updates aktualisierbar. Damit kann die Sicherheit über einen längeren Zeitraum gewährleistet werden.

Eine Weiterbildung der Erfindung betrifft ein Kraftfahrzeug mit einem Steuergerät, welches mit einer fahrzeugexternen elektronischen Einheit kommuniziert und die Funktionsweise der fahrzeugexternen elektronischen Einheit während des Fahrbetriebes überwacht, indem durch das Steuergerät in der fahrzeugexternen elektronischen Einheit eine Operation ausgelöst wird, deren Ergebnis die fahrzeugexterne elektronische Einheit an das Steuergerät übersendet. Bei einem Kraftfahrzeug, bei welchem die Rechenleistung eines Steuergerätes als auch die Bandbreite der Kommunikation zwischen einem Steuergerät und der fahrzeugexternen elektronischen Einheit verringert wird, ist in dem Steuergerät eine Indexliste in Form einer look-up-Tabelle gespeichert, wobei zur Auslösung der Operation ein Index von dem Steuergerät an die fahrzeugexterne elektronische Einheit übertragbar ist, wodurch die fahrzeugexterne elektronische Einheit anhand des Index Eingangsgrößen, welche in Abhängigkeit des Index in der fahrzeugexternen elektronischen Einheit gespeichert sind, bestimmt, mittels welchen die Operation ausführbar ist. Dies hat den Vorteil, dass durch die reine Auswahl von Indizies durch das Steuergerät die Rechenleistung und der Speicherbedarf des Steuergerätes im Kraftfahrzeug minimiert werden.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Beschriebene und/oder bildlich dargestellte Merkmale können für sich oder in beliebiger, sinnvoller Kombination den Gegenstand der Erfindung bilden, gegebenenfalls auch unabhängig von den Ansprüchen, und können insbesondere zusätzlich auch Gegenstand einer oder mehrerer separater Anmeldung/en sein. Gleiche, ähnliche und/oder funktionsgleiche Teile sind mit gleichen Bezugszeichen versehen.

Es zeigen:

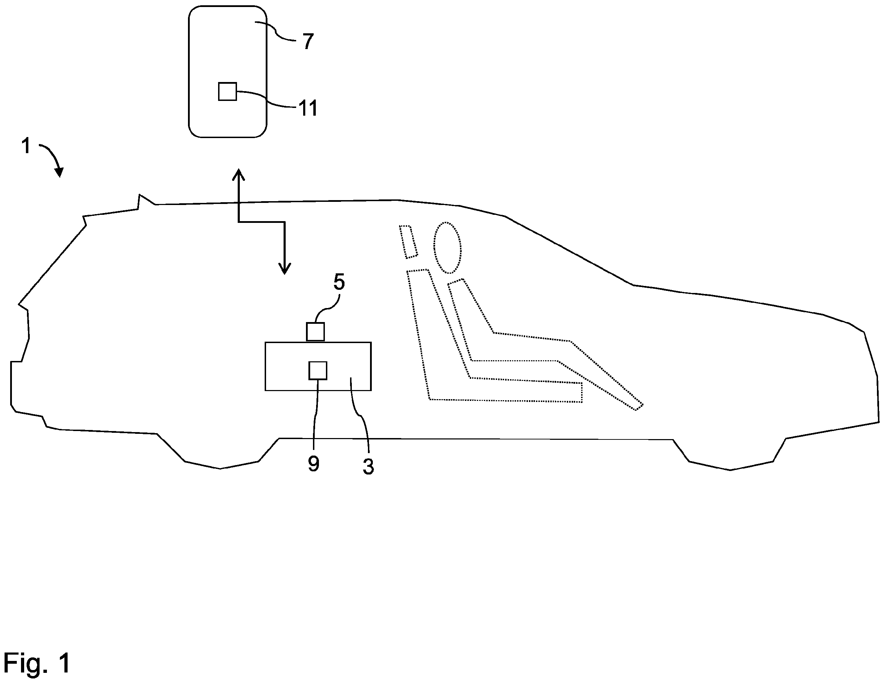

- Fig. 1: ein Ausführungsbeispiel eines Kraftfahrzeugs zur Ausführung des erfindungsgemäßen Verfahrens.

In Fig. 1 ist ein Kraftfahrzeug 1 dargestellt, welches ein Steuergerät 3 aufweist, das über eine Kommunikationsschnittstelle 5 mit einer fahrzeugexternen elektronischen Einheit, beispielsweise einem Smartphone 7, kommuniziert. Dieses Smartphone 7 wird dabei zum Öffnen und Schließen des Kraftfahrzeuges 1 verwendet. Nach einem Signal des Smartphones 7, in welchem von dem Smartphone 7 eine Codierung an das Steuergerät 3 übersendet wird, vergleicht das Steuergerät 3 die von dem Smartphone 7 übersandte Codierung mit einer vorgegebenen Codierung und schaltet einen Aktor eines Fahrzeugschliesssystems, wenn diese beiden Codierungen übereinstimmen.

Um sicherzustellen, dass das Smartphone 7 auch immer korrekt arbeitet, muss während des gesamten Fahrbetriebes die Funktionsweise des Smartphones 7 überprüft werden. Zu diesem Zweck ist in dem Smartphone 7 eine look-up-Tabelle abgespeichert, welche jeweils dem Index entsprechende Eingangsgrößen für eine Operation sowie das erwartete Ergebnis der Operation aufweist. In einem Speicher 9 des Steuergerätes 3 ist ebenfalls eine look-up-Tabelle abgelegt, welche aber lediglich die Indizies beinhaltet. Die Größe des Index leitet sich daraus ab, wie viele unterschiedliche Eingangsgrößen man benötigt, um Fehler sicher zu detektieren.

Beabsichtigt nun das Steuergerät 3 die Funktionstüchtigkeit des Smartphones 7 zu überprüfen, so wählt es per Zufallsgenerator einen Index aus der Indexliste aus, welche in seinem Speicher 9 abgespeichert ist. Über die Kommunikationsschnittstelle 5 wird dieser Index drahtlos an das Smartphone 7 gesendet. Nach Empfang dieses Index liest das Smartphone 7 aus seinem Speicher 11 die, zu diesem Index gehörigen Eingangsgrößen aus und führt die Operation aus. Anschließend sendet das Smartphone 7 die errechneten Ergebnisse der en Operation gemeinsam mit dem abgespeicherten, zu erwartenden Ergebnis an das Steuergerät 3 zurück. Das Steuergerät 3 vergleicht diese beiden Ergebnisse. Bei Übereinstimmung des erwarteten Ergebnisses sowie des berechneten Ergebnisses kann davon ausgegangen werden, dass das Smartphone 7 ordnungsgemäß funktioniert und daher weiterhin zum Öffnen und Schließen oder Steuern des Kraftfahrzeuges verwendet werden kann.

Obwohl die Erfindung im Detail durch bevorzugte Ausführungsbeispiele näher illustriert und erläutert wurde, so ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen beispielsweise hinsichtlich der Funktion oder der Anordnung einzelner, in einer beispielhaften Ausführungsform genannter Elemente vornehmen kann, ohne den Schutzbereich zu verlassen, der durch die Ansprüche und deren rechtliche Entsprechungen, wie etwa weitergehenden Erläuterung in der Beschreibung, definiert wird.

### Bezugszeichenliste

- 1: Kraftfahrzeug
- 3: Steuergerät
- 5: Kommunikationsschnittstelle
- 7: Smartphone oder externe elektronische Einheit
- 9: Speicher
- 11: Speicher

## Patentansprüche

1. Verfahren zur Fernsteuerung einer Funktion eines Kraftfahrzeuges mittels einer fahrzeugexternen elektronischen Einheit, bei welchem die fahrzeugexterne elektronische Einheit (7) während des Fahrvorganges des Kraftfahrzeuges (1) überprüft wird, indem die fahrzeugexterne elektronische Einheit (7) eine Operation löst, deren Ergebnis von einem Steuergerät (3) des Kraftfahrzeuges (1) auf Richtigkeit geprüft wird,
**dadurch gekennzeichnet, dass**
in dem Steuergerät (3) eine Indexliste gespeichert ist, wobei zur Auslösung einer Operation ein Index von dem Steuergerät (3) an die fahrzeugexterne elektronische Einheit (7) übertragen wird und die fahrzeugexterne elektronische Einheit (7) anhand des Index Eingangsgrößen, welche in Abhängigkeit des Index in der fahrzeugexternen elektronischen Einheit (7) gespeichert sind, bestimmt, mittels welchen die Operation ausgeführt wird, wobei eine Überprüfung des Ergebnisses, welches von der fahrzeugexternen elektronischen Einheit (7) berechnet wird, im Kraftfahrzeug durchgeführt wird, und die Steuerung des Kraftfahrzeugs mittels der elektronischen Einheit (7) nur bei korrekter Berechnung freigegeben wird, wobei in der fahrzeugexternen elektronischen Einheit (7) zu jedem Index neben den Eingangsgrößen ein erwartetes Ergebnis der Operation abgespeichert ist, welches gemeinsam mit dem berechneten Ergebnis an das Steuergerät (3) übersandt wird.

2. Verfahren nach Anspruch 1,
**dadurch gekennzeichnet, dass**
das Steuergerät (3) aus der Indexliste einen, an die fahrzeugexterne elektronische Einheit (7) zu übermittelnden Index mittels eines Zufallsgenerators auswählt.

3. Verfahren nach einem der vorherigen Ansprüche,
**dadurch gekennzeichnet, dass**
bei der Berechnung des Ergebnisses unterschiedliche Komponenten der elektronischen Einheit (7) erforderlich sind und genutzt werden.

4. Verfahren nach einem der vorherigen Ansprüche,
**dadurch gekennzeichnet, dass**
die Indexliste aktualisierbar ist.

5. System mit einer fahrzeugexternen elektronischen Einheit (7) und einem Kraftfahrzeug, mit einem Steuergerät (3), welches mit der fahrzeugexternen elektronischen Einheit (7) kommuniziert und die Funktionsweise der fahrzeugexternen elektronischen Einheit (7) während des Fahrbetriebes überwacht, indem durch das Steuergerät (3) in der fahrzeugexternen elektronischen Einheit (7) eine Operation ausgelöst wird, deren Ergebnis die fahrzeugexterne elektronische Einheit (7) an das Steuergerät (3) übersendet,
**dadurch gekennzeichnet, dass**
in dem Steuergerät (3) eine Indexliste in Form einer look-up-Tabelle gespeichert ist, wobei zur Auslösung der Operation ein Index von dem Steuergerät (3) an die fahrzeugexterne elektronische Einheit (7) übertragbar ist, wodurch die fahrzeugexterne elektronische Einheit (7) anhand des Index Eingangsgrößen, welche in Abhängigkeit des Index in der fahrzeugexternen elektronischen Einheit (7) gespeichert sind, bestimmt, mittels welchen die Operation ausführbar ist, wobei eine Überprüfung des Ergebnisses, welches von der fahrzeugexternen elektronischen Einheit (7) berechnebar ist, im Kraftfahrzeug durchgeführbar ist, und die Steuerung des Kraftfahrzeugs mittels der elektronischen Einheit (7) nur bei korrekter Berechnung freigebbar ist, wobei in der fahrzeugexternen elektronischen Einheit (7) zu jedem Index neben den Eingangsgrößen ein erwartetes Ergebnis der Operation abgespeichert ist, welches gemeinsam mit dem berechneten Ergebnis an das Steuergerät (3) übersendbar ist.

## Claims

1. Method for the remote control of a function of a motor vehicle by means of a vehicle-external electronic unit, in which the vehicle-external electronic unit (7) is checked during the driving event of the motor vehicle (1) by virtue of the vehicle-external electronic unit (7) triggering an operation, the result of which is checked for correctness by a control device (3) of the motor vehicle (1),
**characterized in that**
the control device (3) stores an index list, wherein an operation is triggered by virtue of an index being transmitted from the control device (3) to the vehicle-external electronic unit (7) and the vehicle-external electronic unit (7) using the index to determine input variables, stored in the vehicle-external electronic unit (7) on the basis of the index, by means of which the operation is carried out, wherein a check on the result computed by the vehicle-external electronic unit (7) is performed in the motor vehicle and control of the motor vehicle by means of the electronic unit (7) is enabled only if the computation is correct, the vehicle-external electronic unit (7) storing for each index not only the input variables but also an expected result of the operation, which result is sent to the control device (3) together with the computed result.

2. Method according to Claim 1,
**characterized in that**
the control device (3) uses a random number generator to select from the index list an index that is to be transferred to the vehicle-external electronic unit (7) .

3. Method according to either of the preceding claims,
**characterized in that**
different components of the electronic unit (7) are required and are used for computing the result.

4. Method according to one of the preceding claims,
**characterized in that**
the index list is updatable.

5. System containing a vehicle-external electronic unit (7) and a motor vehicle, having a control device (3) that communicates with the vertical-external electronic unit (7) and monitors the operation of the vehicle-external electronic unit (7) during driving operation by virtue of the control device (3) triggering an operation in the vehicle-external electronic unit (7), the result of which operation is sent to the control device (3) by the vehicle-external electronic unit (7),
**characterized in that**
the control device (3) stores an index list in the form of a lookup table, wherein the operation is triggered by virtue of an index being able to be transmitted from the control device (3) to the vehicle-external electronic unit (7), as a consequence of which the vehicle-external electronic unit (7) uses the index to determine input variables, stored in the vehicle-external electronic unit (7) on the basis of the index, by means of which the operation can be carried out, wherein a check on the result that can be computed by the vehicle-external electronic unit (7) can be performed in the motor vehicle and control of the motor vehicle by means of the electronic unit (7) can be enabled only if the computation is correct, the vehicle-external electronic unit (7) storing for each index not only the input variables but also an expected result of the operation, which result can be sent to the control device (3) together with the computed result.

## Revendications

1. Procédé, destiné à télécommander une fonction d'un véhicule automobile, au moyen d'une unité électronique externe au véhicule, lors duquel l'unité électronique (7) externe au véhicule est vérifiée pendant le processus de conduite du véhicule automobile (1), en ce que l'unité électronique (7) externe au véhicule résout une opération dont le résultat est contrôlé au niveau de son exactitude par un appareil de commande (3) du véhicule automobile (1),
**caractérisé en ce que**
dans l'appareil de commande (3) est mémorisée une liste indicielle, pour la résolution d'une opération, un indice étant transmis par l'appareil de commande (3) à l'unité électronique (7) externe au véhicule et à l'aide de l'indice, l'unité électronique (7) externe au véhicule déterminant des variables d'entrée, qui sont mémorisées dans l'unité électronique (7) externe en fonction de l'indice, au moyen desquelles l'opération est réalisée, une vérification du résultat qui est calculé par l'unité électronique (7) externe au véhicule étant réalisée dans le véhicule automobile, et le système de commande du véhicule automobile étant validé au moyen de l'unité électronique (7) uniquement si le calcul est correct, dans l'unité électronique (7) externe au véhicule étant mémorisé, hormis les variables d'entrée un résultat attendu de l'opération, lequel est envoyé conjointement avec le résultat calculé à l'appareil de commande (3).

2. Procédé selon la revendication 1,
**caractérisé en ce que**
l'appareil de commande (3) sélectionne dans la liste indicielle un indice qui doit être transmis à l'unité électronique (7) au moyen d'un générateur aléatoire.

3. Procédé selon l'une quelconque des revendications précédentes,
**caractérisé en ce que**
lors du calcul du résultat, différents composants de l'unité électronique (7) sont requis et utilisés.

4. Procédé selon l'une quelconque des revendications précédentes,
**caractérisé en ce que**
la liste indicielle est susceptible d'être mise à jour.

5. Système, pourvu d'une unité électronique (7) externe au véhicule et d'un véhicule automobile, doté d'un appareil de commande (3), lequel communique avec l'unité électronique (7) externe au véhicule et supervise le mode fonctionnel de l'unité électronique (7) externe au véhicule pendant le processus de conduite, en ce que l'appareil de commande (3) déclenche dans l'unité électronique (7) externe au véhicule une opération dont le résultat est envoyé à l'appareil de commande (3) par l'unité électronique (7) externe au véhicule,
**caractérisé en ce que**
dans l'appareil de commande (3) est mémorisée un liste indicielle sous la forme d'une table de conversion, pour résoudre l'opération, un indice étant transmissible par l'appareil de commande (3) à l'unité électronique (7) externe au véhicule, de ce fait, l'unité électronique (7) externe au véhicule déterminant à l'aide de l'indice des variables d'entrée, qui en fonction de l'indice sont mémorisées dans l'unité électronique (7) externe au véhicule, au moyen desquelles l'opération est réalisable, une vérification du résultat calculable par l'unité électronique (7) externe au véhicule automobile étant réalisable dans le véhicule automobile et le système de commande du véhicule n'étant susceptible d'être validé au moyen de l'unité électronique (7) que si le calcul est correct, dans l'unité électronique (7) externe au véhicule étant mémorisé, hormis les variables d'entrée un résultat attendu de l'opération, lequel est susceptible d'être envoyé conjointement avec le résultat calculé à l'appareil de commande (3).
